# EUROPÄISCHE PATENTSCHRIFT

(11) **EP 1 955 884 B1**
(45) Veröffentlichungstag und Bekanntmachung des Hinweises auf die Patenterteilung: **27.10.2010**
(21) Anmeldenummer: 08001868.2
(22) Anmeldetag: 01.02.2008
(51) Int. Cl.: B60J 10/00, B25B 27/00

(54) **Vorrichtung zur Befestigung eines Dichtungsstrangs an einer Fahrzeugkarosserie**
Device for attaching a sealing strip to an automobile body
Dispositif de fixation d'un joint d'étanchéité sur la carrosserie d'un véhicule

(30) Priorität: 08.02.2007 DE 102007006240
(43) Veröffentlichungstag der Anmeldung: 13.08.2008
(73) Patentinhaber: SaarGummi technologies S.à.r.l., 5445 Schengen (LU)
(72) Erfinder: Kast, Christian, 66663 Merzig (DE)
(74) Vertreter: Bernhardt, Reinold

(56) Entgegenhaltungen:
- EP-A- 0 794 079
- DE-A1- 4 327 067
- US-A- 2 275 732
- US-A- 4 838 986
- US-A- 5 067 225

## Beschreibung

Die Erfindung betrifft eine Vorrichtung zur Befestigung eines, insbesondere eine Fahrzeugtür abdichtenden, Dichtungsstrangs an einer Fahrzeugkarosserie, mit einer entlang einem Aufnahmesitz für den Dichtungsstrang bewegbaren Rolle, welche den Dichtungsstrang mit ihrer Umfangsfläche gegen den Aufnahmesitz presst und unter Abrollen auf dem angepressten Dichtungsstrang in dessen Längsrichtung den Dichtungsstrang fortlaufend mit der Fahrzeugkarosserie verbindet, sowie mit einer den Dichtungsstrang gegen Verschiebung auf der Umfangsfläche in Richtung der Rollendrehachse sichernden Führung.

Vorrichtungen der eingangs erwähnten Art, sog. Rollopplikationsvorrichtungen, sind durch Benutzung und z.B. aus der US 5,067,225 A und der DE 43 27 067 A1 bekannt. Die Rolle dieser Vorrichtungen wird durch geeignete mechanische Einrichtungen, z.B. Roboter, oder von Hand entlang einem, z.B. an einer Fahrzeugtüröffnung oder Fahrzeugtür umlaufenden, Aufnahmesitz für den Dichtungsstrang unter jeweiliger Ausrichtung der Rollenachse bzw. Rollenumfangsfläche zu dem Aufnahmesitz bewegt. Entsprechend wird der Dichtungsstrang zur fortlaufenden Verbindung mit dem Aufnahmesitz in geeigneter Weise zugeführt. Die Verbindung des Dichtungsstrangs mit der Karosserie erfolgt in der Regel durch Verklebung mit Hilfe eines doppelt klebenden Bandes. Die genannte Führung sichert, dass der Dichtungsstrang auf der Umfangsfläche in Bezug auf die Richtung der Rollendrehachse stets die gleiche definierte Position einnimmt, so dass allein durch Steuerung der Bewegung der Rolle relativ zum Aufnahmesitz der Dichtungsstrang jeweils in der gewünschten Position mit der Karosserie verbunden werden kann. Der Führung dienen von den Rändern der Umfangsfläche vorstehende Ringstege, wobei an wenigstens einen der Ringstege eine Rille angrenzt, in welche ein vorspringender Abschnitt des zusammengepressten Dichtungsstrangs eingreift. Die obengenannten Druckschriften US 5,067,225 A und DE 43 27 067 A1 beschreiben Rollapplikationsvorrichtungen zum fortlaufenden Aufstecken von Dichtungssträngen auf einen Karosserieflansch. Die Umfangsflächen der Applikationsrollen weisen ein Querschnittsprofil auf, das dem Profil der Dichtungsstränge auf der dem Flansch abgewandten Seite angepasst ist.

Der Erfindung liegt die Aufgabe zugrunde, die Möglichkeiten zur Befestigung von Dichtungssträngen an Fahrzeugkarosserien durch Rollapplikation zu erweitern.

Diese Aufgabe wird durch eine Vorrichtung gelöst, welche dadurch gekennzeichnet ist, dass der Dichtungsstrang Bestandteil der Vorrichtung ist und die Führung einen Materialansatz oder/und eine Materialausnehmung am Dichtungsstrang umfasst, wobei im angepressten Zustand am Dichtungsstrang durch den Materialansatz eine Führungsschiene für den Eingriff in eine in der Umfangsfläche der Rolle umlaufende Rille oder/und durch die Materialausnehmung eine Führungsrille für die Aufnahme eines von der Umfangsfläche der Rolle vorstehenden Ringvorsprungs gebildet ist.

Vorteilhaft erlaubt es diese Erfindungslösung, wenigstens den die umlaufende Rille begrenzenden Ringsteg in seiner Höhe zu reduzieren. Somit kann auch der für die Befestigung der Dichtung an der Fahrzeugkarosserie durch Rollapplikation erforderliche Freiraum reduziert und die Karosseriekonstruktion oder/und die Lage der Dichtung an der Tür oder dem Karosserieausschnitt vorteilhaft verändert werden. Durch die umlaufende Rille und die sich in Längsrichtung des Dichtungsstrangs erstreckende Führungsschiene bzw. die Führungsrille und den umlaufenden Ringvorsprung ist eine Führung gebildet, welche wenigstens einen der seitlichen Ringstege nach dem Stand der Technik ganz oder teilweise überflüssig macht.

In einer bevorzugten Ausführungsform der Erfindung weist der Dichtungsstrang einen schlauchförmigen Dichtungsabschnitt auf und der Materialansatz steht von der Schlauchwand vor. Alternativ oder zusätzlich kann eine Materialausnehmung in der Schlauchwand gebildet sein. Zur Bildung eines Materialansatzes oder einer Materialausnehmung kommt aber auch der aus härterem Gummimaterial bestehende Befestigungsabschnitt des Dichtungsstrangs in Betracht, z.B. eine der Befestigung dienende Lippe.
Während es möglich ist, den Materialansatz oder die Materialausnehmung auf der der Umfangsfläche zugewandten Außenseite des Dichtungsstrangs vorzusehen, steht der Materialansatz in einer besonders bevorzugten Ausführungsform der Erfindung von der Innenseite der Schlauchwand vor oder/und die Materialausnehmung ist auf der Innenseite der Schlauchwand gebildet. Vorteilhaft wird so durch den Materialansatz oder die Materialausnehmung die Dichtfunktion nicht beeinträchtigt.

Vorzugsweise ist/sind der Materialansatz oder/und die Materialausnehmung in einem Teil der Schlauchwand gebildet, welcher dem zur Verbindung mit der Karosserie vorgesehenen Befestigungsabschnitt des Dichtungsstrangs zugewandt oder abgewandt ist.

Der Dichtungsstrang kann zur Bildung der Führung mehrere Materialansätze oder/und Materialausnehmungen aufweisen.

Zweckmäßig ist im Querschnitt die Führungsschiene komplementär zu der umlaufenden Rille oder/und die Führungsrille komplementär zu dem Ringvorsprung ausgebildet. Die genannten Teile greifen somit schlupffrei ineinander.

Indem sich die Breite der Führungsrille zum freien Ende hin verringert und/oder die Breite der umlaufenden Rille zur offenen Seite hin vergrößert, ist für eine Zentrierung der ineinander greifenden Teile gesorgt. Entsprechend kann sich die Breite der Führungsrille zur offenen Seite hin vergrößern und/oder die Breite des Ringstegs zum freien Ende hin verringern.

In weiterer Ausgestaltung der Erfindung ist die umlaufende Rille oder der Ringvorsprung im mittleren Bereich der Umfangsfläche angeordnet, was die Zentrierung des Dichtungsstrangs auf der Umfangsfläche der Rolle zusätzlich fördert.

Der die Führungsschiene bildende Materialansatz kann im Bereich von Öffnungen in der Schlauchwand unterbrochen sein. Solche Unterbrechungen an z.B. notwendigen Entlüftungsöffnungen beeinträchtigen die Funktion der gebildeten Führung kaum.

Die Führung kann ferner an wenigstens einem der beiden Ränder der Umfangsfläche einen vorstehenden Ringsteg aufweisen, der zusätzlich für eine Führung sorgt, wobei der Ringsteg eine weitere, in der Umfangsfläche umlaufende Rille für die Aufnahme eines durch Zusammenpressen des schlauchförmigen Dichtungsabschnitts gebildeten Vorsprungs begrenzt. Indem die Höhe des Ringstegs kleiner als die vorstehende Länge des Vorsprungs ist, behindert der vorstehende Ringsteg die Befestigung des Dichtungsstrangs durch Rollapplikation nicht.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1 bis 4: jeweils einen durch eine Rolle an einer Fahrzeugkarosserie zu befestigenden Dichtungsstrang gemäß verschiedenen Ausführungsbeispielen für die vorliegende Erfindung,
- Fig. 5: verschiedene weitere Ausführungsbeispiele in einer Vorrichtung nach der Erfindung verwendbarer Dichtungsstränge.

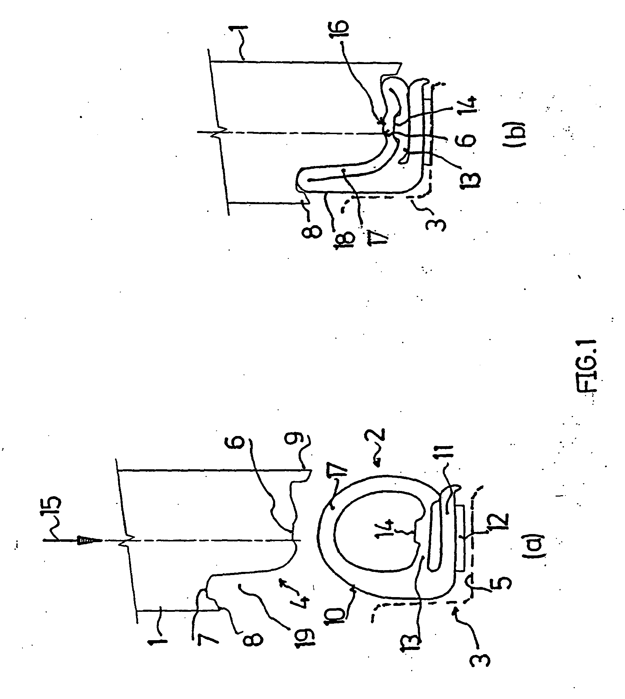

Eine in Fig. 1 teilweise dargestellte Rolle 1 einer Vorrichtung zum Befestigen eines Dichtungsstrangs 2 an einer (durch eine Strichlinie angedeuteten) Fahrzeugkarosserie 3 weist eine Umfangsfläche 4 zur Anlage gegen den Dichtungsstrang 2 auf.

Im vorliegenden Ausführungsbeispiel dient der Dichtungsstrang 3 zur Abdichtung einer Fahrzeugtür und wird an einem umlaufenden Aufnahmesitz 5 am Rand der Türöffnung mit der Fahrzeugkarosserie verbunden. In der Umfangsfläche 4 ist in einer zur Drehachse der Rolle 1 senkrechten Ebene eine Rille 6 gebildet. Eine weitere, in einem Stufenabsatz 19 der Rolle 1 gebildete Rille 7 in der Umfangsfläche 4 ist außenseitig durch einen Ringsteg 8 begrenzt, welcher am Rand der Rolle 1 von der Umfangsfläche 4 vorsteht. Am anderen Rand der Rolle 1 ist ein weiterer vorstehender Ringsteg 9 gebildet.

Der Dichtungsstrang weist einen schlauchförmigen Dichtungsabschnitt 10 und einen lippenartigen Befestigungsabschnitt 11 auf, der aus härterem Material als der Dichtungsabschnitt besteht. An seiner dem Aufnahmesitz 5 zugewandten Seite ist an dem Befestigungsabschnitt 11 ein doppelt klebendes Band 12 angebracht.

Ein dem Befestigungsabschnitt 12 zugewandter Schlauchwandteil 13 des Dichtungsabschnitts 10, der noch aus dem härteren Material des Befestigungsabschnitts 11 bestehen kann, weist einen Materialansatz 14 auf, welcher in das Innere des schlauchförmigen Dichtungsabschnitts 10 hinein vorsteht und der Bildung einer in Längsrichtung des Dichtungsstrangs verlaufenden Führungsschiene dient.

Zur Befestigung des Dichtungsstrangs 2 an dem am Türöffnungsrand umlaufenden Aufnahmesitz 5 wird der Dichtungsstrang 2 durch die Rolle 1 gemäß Pfeil 15 gegen den Aufnahmesitz 5 gepresst, wobei die inzwischen freigelegte Klebefläche des doppelt klebenden Bandes 12 an der Fahrzeugkarosserie anhaftet. Durch Abrollen der Rolle 1 in Längsrichtung des Dichtungsstrangs 2 auf (dem geeignet zugeführten) Dichtungsstrang kommt es zur fortlaufenden Verklebung mit der Karosserie. Über (nicht gezeigte) Einrichtungen wird die Rolle 1 entlang dem Dichtungssitz bewegt (und in ihrer) Neigung jeweils so eingestellt, dass die Drehachse der Rolle etwa parallel zur Fläche des Aufnahmesitzes 5 verläuft.

Diese Befestigung des Dichtungsstrangs 2 durch Bewegung der Rolle 1 erfordert, dass der Dichtungsstrang auf der Umfangsfläche 4 der Rolle 1 in Richtung der Drehachse der Rolle 1 stets die gleiche Position einnimmt und nicht seitlich abrutscht. Hierfür sorgt in erster Linie eine Führungsschiene 16, welche durch den Materialansatz 14 und ferner dadurch gebildet ist, dass sich beim Anpressen der Dichtungsstrangs 2 gegen den Aufnahmesitz 5 ein dem Schlauchwandteil 13 gegenüberliegender Schlauchwandteil 17 des Dichtungsabschnitts 10 um den Materialansatz 14 herum gegen den Schlauchwandteil 13 des Dichtungsabschnitts 10 anlegt. Die sich ergebende, fortlaufend gebildete Führungsschiene ist komplementär zu der Rille 6 in der Umfangsfläche 4 geformt. Durch die sich nach oben verringernde Breite der Führungsschiene 16 und sich zur offenen Seite hin vergrößernde Breite der Rille 6 ist für eine Zentrierung gesorgt. Weiterhin trägt die Rille 8 zur Führung des Dichtungsabschnitts 2 auf der Umfangsfläche 4 bei, in welche ein beim Zusammenpressen durch die Rolle 1 gebildeter Vorsprung 18 des Dichtungsstrangs 2 eingreift. Die Führung durch die Führungsschiene 16 erlaubt es, die Höhe des Ringstegs 8 gering zu halten, so dass er von der Fahrzeugkarosserie zurückversetzt ist und die Befestigung des Dichtungsstrangs 2 an der Fahrzeugkarosserie 3 durch die Rolle 1 nicht behindert.

In den folgenden Figuren sind gleiche oder gleichwirkende Teile mit der selben Bezugszahl wie in Fig. 1 bezeichnet sind, wobei der betreffenden Bezugszahl der Buchstabe a, b usw. beigefügt ist.

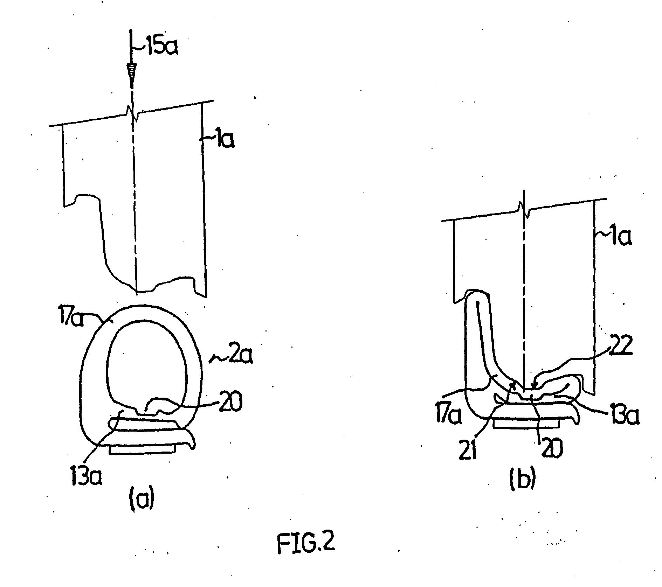

Bei dem in Fig. 2 dargestellten Ausführungsbeispiel ist anstelle eines Materialvorsprungs an einem Dichtungsstrang 2a eine sich in ihrer Längsausdehnung in Längsrichtung des Dichtungsstrangs erstreckende Materialausnehmung 20 gebildet. Entsprechend weist eine Rolle 1 a keine umlaufende Rille sondern einen umlaufenden Ringvorsprung 21 auf. In dem sich ein der Materialausnehmung 20 gegenüberliegender Schlauchwandteil 17a beim Zusammenpressen des Dichtungsstrangs in die Materialausnehmung 20 hinein ausbaucht, ist durch die Materialausnehmung 20 eine Führungsrille 22 gebildet, welche im Querschnitt zu dem Ringvorsprung 21 komplementär ist.

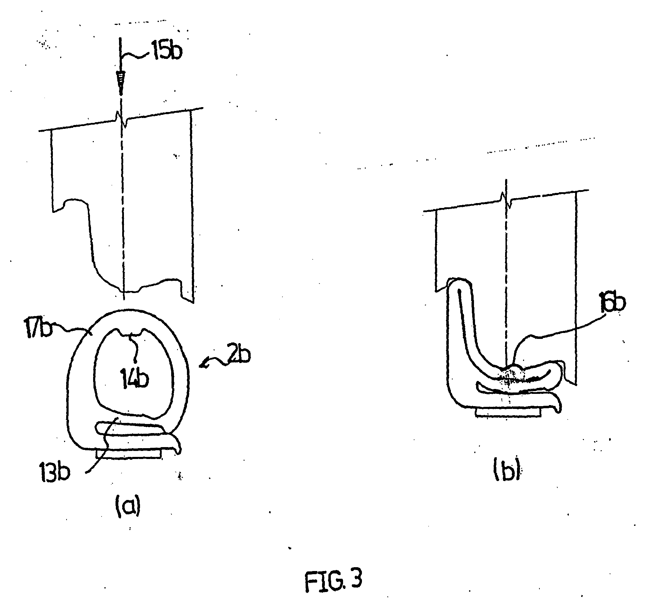

Bei dem Ausführungsbeispiel von Fig. 3 ist ein Materialansatz 14b an einem Schlauchwandteil 17b gebildet, welcher einem Schlauchwandteil 13b gegenüberliegt, der einen Befestigungsabschnitt 11 b eines Dichtungsstrangs 2b zugewandt ist. Beim Zusammenpressen des Dichtungsstrangs bildet sich eine Führungsschiene 16b.

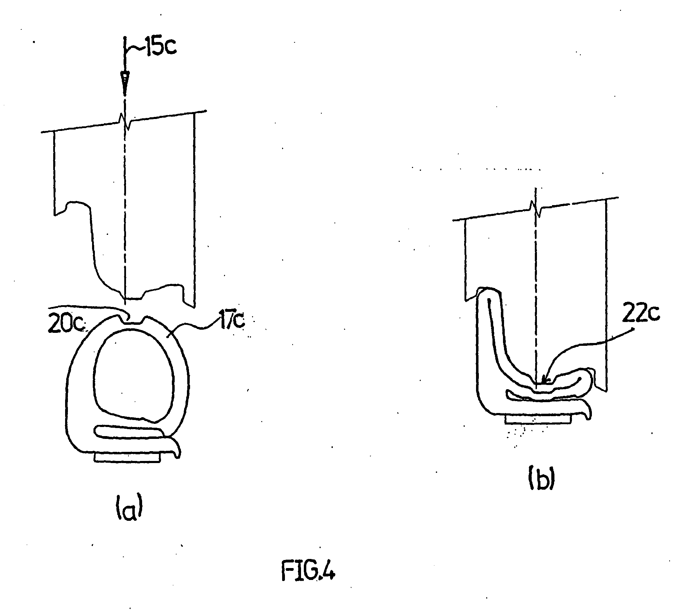

Fig. 4 zeigt eine Materialausnehmung 20c auf der Außenseite eines Schlauchwandteils 17c, die zur Bildung einer Führungsrille 22c führt.

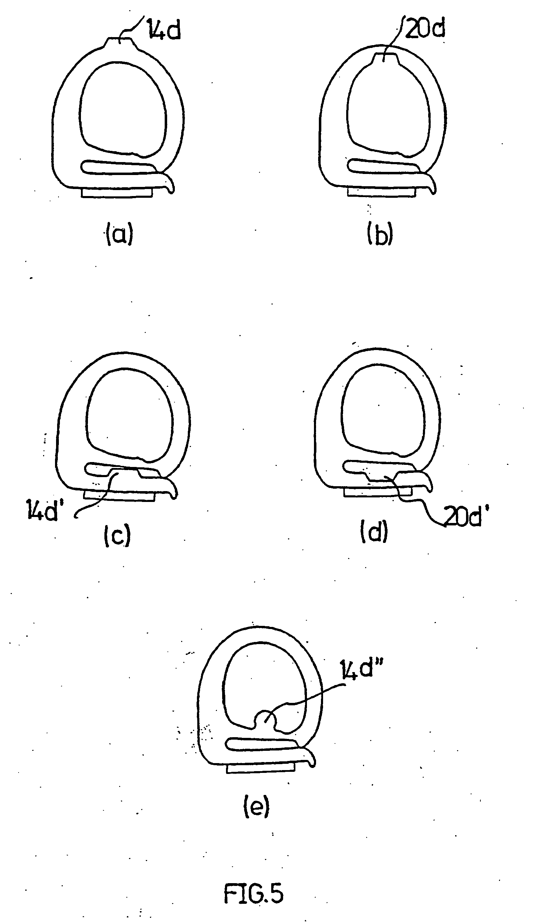

Weitere Möglichkeiten zur Bildung von Materialansätzen (14d, 14d', 14d") und Materialausnehmungen (20d, 20d') gehen aus Fig. 5 hervor, wobei Fig. 5e einen hinterschnittenen Materialansatz 14d" zeigt.

## Patentansprüche

1. Vorrichtung zur Befestigung eines, insbesondere eine Fahrzeugtür abdichtenden, Dichtungsstrangs (2) an einer Fahrzeugkarosserie (3), mit einer entlang einem Aufnahmesitz (5) für den Dichtungsstrang (2) bewegbaren Rolle (1), welche den Dichtungsstrang (2) mit ihrer Umfangsfläche (4) gegen den Aufnahmesitz (5) presst und unter Abrollen auf dem angepressten Dichtungsstrang (2) in dessen Längsrichtung den Dichtungsstrang (2) fortlaufend mit der Fahrzeugkarosserie verbindet, sowie mit einer den Dichtungsstrang gegen Verschiebung auf der Umfangsfläche (4) in Richtung der Rollendrehachse sichernden Führung,
**dadurch gekennzeichnet,**
**dass** der Dichtungsstrang Bestandteil der Vorrichtung ist und die Führung einen Materialansatz (14) oder/und eine Materialausnehmung (20) am Dichtungsstrang (2,2a) umfasst, wobei im angepressten Zustand an dem Dichtungsstrang (2) durch den Materialansatz (14) eine Führungsschiene (16) für den Eingriff in eine in der Umfangsfläche (4) der Rolle (1) umlaufende Rille (6) oder/und durch die Materialausnehmung (20) eine Führungsrille (22) für die Aufnahme eines von der Umfangsfläche der Rolle vorstehenden Ringvorsprungs (21) gebildet ist.

2. Vorrichtung nach Anspruch 1,
**dadurch gekennzeichnet,**
**dass** der Dichtungsstrang (2) einen schlauchförmigen Dichtungsabschnitt (10) aufweist und der Materialansatz (14) von der Schlauchwand vorsteht oder/und die Materialausnehmung (20) in der Schlauchwand gebildet ist.

3. Vorrichtung nach Anspruch 2,
**dadurch gekennzeichnet,**
**dass** der Materialansatz (14) von der Innenseite der Schlauchwand vorsteht oder/und die Materialausnehmung (20) auf der Innenseite der Schlauchwand gebildet ist.

4. Vorrichtung nach Anspruch 2 oder 3,
**dadurch gekennzeichnet,**
**dass** der Materialansatz (14) oder/und die Materialausnehmung (20) in einem Teil (13) der Schlauchwand gebildet ist/sind, welcher einem zur Verbindung mit der Karosserie (3) vorgesehenen Befestigungsabschnitt (11) des Dichtungsstrangs (2) zugewandt oder abgewandt ist.

5. Vorrichtung nach einem der Ansprüche 1 bis 4,
**dadurch gekennzeichnet,**
**dass** der Dichtungsstrang zur Bildung der Führung mehrere Materialansätze oder/und Materialausnehmungen aufweist.

6. Vorrichtung nach einem der Ansprüche 1 bis 5,
**dadurch gekennzeichnet,**
**dass** im Querschnitt die Führungsschiene (16) komplementär zu der umlaufenden Rille (6) oder/und die Führungsrille (22) komplementär zu dem Ringvorsprung (21) ausgebildet ist.

7. Vorrichtung nach einem der Ansprüche 1 bis 6,
**dadurch gekennzeichnet,**
**dass** sich die Breite der Führungsschiene (16) zum freien Ende hin verringert und/oder die Breite der umlaufenden Rille (6) zur offenen Seite hin vergrößert.

8. Vorrichtung nach einem der Ansprüche 1 bis 7,
**dadurch gekennzeichnet,**
**dass** sich die Breite der Führungsrille (22) zur offenen Seite hin vergrößert und/oder die Breite des Ringstegs (21) zum freien Ende hin verringert.

9. Vorrichtung nach einem der Ansprüche 1 bis 8,
**dadurch gekennzeichnet,**
**dass** die umlaufende Rille (6) oder der Ringvorsprung (21) im mittleren Teil der Umfangsfläche (4) angeordnet ist.

10. Vorrichtung nach einem der Ansprüche 1 bis 9,
**dadurch gekennzeichnet,**
**dass** der Materialansatz im Bereich von Öffnungen in der Schlauchwand unterbrochen ist.

11. Vorrichtung nach einem der Ansprüche 1 bis 10,
**dadurch gekennzeichnet,**
**dass** die Führung ferner einen vorstehenden Ringsteg (8,9) an wenigstens einem der beiden Ränder der Umfangsfläche (4) umfasst.

12. Vorrichtung nach Anspruch 11,
**dadurch gekennzeichnet,**
**dass** der Ringsteg (8) eine weitere in der Umfangsfläche (4) umlaufende Rille (7) für die Aufnahme eines durch das Zusammenpressen des Dichtungsstrangs gebildeten Vorsprungs (18) des schlauchförmigen Dichtungsabschnitts (10) begrenzt.

13. Vorrichtung nach Anspruch 12,
**dadurch gekennzeichnet,**
**dass** die Höhe des Ringstegs (8) kleiner als die vorstehende Länge des Vorsprungs (18) ist.

14. Verfahren zur Befestigung eines, insbesondere eine Fahrzeugtür abdichtenden, Dichtungsstrangs (2) an einer Fahrzeugkarosserie (3), bei dem eine Rolle (1) entlang einem Aufnahmesitz (5) für den Dichtungsstrang (2) bewegt, und der Dichtungsstrang (2) mit der Umfangsfläche (4) der Rolle (1) gegen den Aufnahmesitz (5) gepresst wird, und der Dichtungsstrang (2) unter Abrollen der Rolle (1) im angepressten Zustand in dessen Längsrichtung fortlaufend mit der Fahrzeugkarosserie verbunden wird und bei dem der Dichtungsstrang zur Sicherung gegen Verschiebung auf der Umfangsfläche (4) in Richtung der Rollendrehachse geführt wird,
**dadurch gekennzeichnet,**
**dass** im Rahmen des Verfahrens der Dichtungsstrang (2) verändert und zur Führung ein Materialansatz (14) oder/und eine Materialausnehmung (20) am Dichtungsstrang (2,2a) gebildet wird, so dass im angepressten Zustand an dem Dichtungsstrang (2) durch den Materialansatz (14) eine Führungsschiene (16) für den Eingriff in eine in der Umfangsfläche (4) der Rolle (1) umlaufende Rille (6) oder/und durch die Materialausnehmung (20) eine Führungsrille (22) für die Aufnahme eines von der Umfangsfläche der Rolle vorstehenden Ringvorsprungs (21) entsteht.

## Claims

1. Device for fastening a sealing strip (2), particularly a strip sealing a vehicle door, to vehicle bodywork (3), with a roller (1), which is movable along a receiving seat (5) for the sealing strip (2) and presses the sealing strip (2) by its circumferential surface (4) against the receiving seat (5) and which, under rolling along on the pressed-on sealing strip (2) in the longitudinal direction thereof, continuously connects the sealing strip (2) with the vehicle bodywork, and with a guide securing the sealing strip against displacement on the circumferential surface (4) in the direction of the roller axis of rotation, **characterised in that** the sealing strip is a component of the device and the guide comprises a material dog (14) and/or a material recess (20) at the sealing strip (2, 2a), wherein in the pressed-on state a guide rail (16) for engagement in a groove (16) encircling in the circumferential surface (4) of the roller (1) is formed at the sealing strip (2) by the material dog (14) and/or a guide groove (22) for reception of an annular projection (21) protruding from the circumferential surface of the roller is formed at the sealing strip (2) by the material recess (20).

2. Device according to claim 1, **characterised in that** the sealing strip (2) has a hose-shaped sealing section (10) and the material dog (14) protrudes from the hose wall and/or the material recess (20) is formed in the hose wall.

3. Device according to claim 2, **characterised in that** the material dog (14) protrudes from the inner side of the hose wall and/or the material recess (20) is formed on the inner side of the hose wall.

4. Device according to claim 2 or 3, **characterised in that** the material dog (14) and/or the material recess (20) is or are formed in a part (13) of the hose wall which faces towards or away from a fastening section (11), which is provided for connection with the bodywork (3), of the sealing strip (2).

5. Device according to any one of claims 1 to 4, **characterised in that** the sealing strip has several material dogs and/or material recesses for formation of the guide.

6. Device according to any one of claims 1 to 5, **characterised in that** in cross-section the guide rail (16) is formed to be complementary to the encircling groove (6) and/or the guide groove (22) is formed to be complementary to the annular projection (21).

7. Device according to any one of claims 1 to 6, **characterised in that** the width of the guide rail (16) reduces towards the free end and/or the width of the encircling groove (6) increases towards the open end.

8. Device according to any one of claims 1 to 7, **characterised in that** the width of the guide groove (22) increases towards the open side and/or the width of the annular web (21) reduces towards the free end.

9. Device according to any one of claims 1 to 8, **characterised in that** the encircling groove (6) or the annular projection (21) is arranged in the middle part of the circumferential surface (4).

10. Device according any one of claims 1 to 9, **characterised in that** the material projection is interrupted in the region of the openings in the hose wall.

11. Device according to any one of claims 1 to 10, **characterised in that** the guide further comprises a protruding annular web (8, 9) at at least one of the two edges of the circumferential surface (4).

12. Device according to claim 11, **characterised in that** the annular web (8) bounds a further groove (7), which encircles in the circumferential surface (4), for reception of a projection (18), which is formed by the compression of the sealing strip, of the hose-shaped sealing section (10).

13. Device according to claim 12, **characterised in that** the height of the annular web (8) is less than the protruding length of the projection (18).

14. Method of fastening a sealing strip (2), particularly a strip sealing a vehicle door, to vehicle bodywork (3), in which a roller (1) is moved along a receiving seat (5) for the sealing strip (2) and the sealing strip (2) is pressed by the circumferential surface (4) of the roller (1) against the receiving seat (5), and the sealing strip (2) under rolling along of the roller (1) is continuously connected in the pressed-on state in the longitudinal direction thereof with the vehicle bodywork and in which the sealing strip is guided for securing against displacement on the circumferential surface (4) in the direction of the roller axis of rotation, **characterised in that** in the course of the method the sealing strip (2) changes and a material dog (14) and/or a material recess (20) is formed at the sealing strip (2, 2a) for the guiding so that in the pressed-on state a guide rail (16) for engagement in a groove (16) encircling in the circumferential surface (4) of the roller (1) arises at the sealing strip (2) due to the material dog (14) and/or a guide groove (22) for reception of an annular projection (21) protruding from the circumferential surface of the roller arises at the sealing strip (2) due to the material recess (20).

## Revendications

1. Dispositif de fixation d'un joint d'étanchéité (2), rendant étanche en particulier une porte de véhicule, à une carrosserie de véhicule (3), avec un rouleau (1) déplaçable le long d'un siège de réception (5) du joint d'étanchéité (2), qui presse le joint d'étanchéité (2) avec sa face périphérique (4) contre le siège de réception (5) et, en roulant sur le joint d'étanchéité appliqué par pression (2) dans sa direction longitudinale, relie le joint d'étanchéité (2) continuellement à la carrosserie de véhicule, et avec un guidage assurant le joint d'étanchéité à l'encontre d'un déplacement sur la face périphérique (4) dans la direction de l'axe de rotation du rouleau,
**caractérisé en ce que** le joint d'étanchéité est un composant du dispositif, et le guidage comprend un bout rapporté de matériau (14) et/ou un évidement de matériau (20) au joint d'étanchéité (2.2a), où à l'état appliqué par pression au joint d'étanchéité (2) par le bout rapporté de matériau (14) est formé un rail de guidage (16) pour l'engagement dans une rainure (6) s'étendant tout autour dans la face de pourtour (4) du rouleau (1) et/ou est formé par l'évidement de matériau (20) une rainure de guidage (22) pour la réception d'une saillie annulaire (21) faisant saillie de la face de pourtour du rouleau.

2. Dispositif selon la revendication 1, **caractérisé en ce que** le joint d'étanchéité (2) présente une section d'étanchéité tubulaire (10) et que le bout rapporté de matériau (14) fait saillie de la paroi tubulaire et/ou l'évidement de matériau (20) est réalisé dans la paroi tubulaire.

3. Dispositif selon la revendication 2, **caractérisé en ce que** le bout rapporté de matériau (14) fait saillie du côté intérieur de la paroi tubulaire ou/et l'évidement de matériau (20) est formé sur le côté intérieur de la paroi tubulaire.

4. Dispositif selon la revendication 2 ou 3, **caractérisé en ce que** le bout rapporté de matériau (14) et/ou l'évidement de matériau (20) est/sont réalisés dans une partie (13) de la paroi tubulaire, qui est orientée vers ou éloignée d'une section de fixation (11) du joint d'étanchéité (2) prévue pour l'assemblage avec la carrosserie (3).

5. Dispositif selon l'une des revendications 1 à 4, **caractérisé en ce que** le joint d'étanchéité, pour former le guidage, présente plusieurs bouts rapportés de matériau et/ou évidements de matériau.

6. Dispositif selon l'une des revendications 1 à 5, **caractérisé en ce qu'**en section transversale, le rail de guidage (16) est réalisé d'une manière complémentaire à la rainure s'étendant tout autour (6) et/ou la rainure de guidage (22) est réalisée d'une manière complémentaire à la saillie annulaire (21).

7. Dispositif selon l'une des revendications 1 à 6, **caractérisé en ce que** la largeur du rail de guidage (16) diminue vers l'extrémité libre et/ou la largeur de la rainure s'étendant tout autour (6) s'agrandit vers le côté ouvert.

8. Dispositif selon l'une des revendications 1 à 7, **caractérisé en ce que** la largeur de la rainure de guidage (22) s'agrandit vers le côté ouvert et/ou la largeur de la nervure annulaire (21) diminue vers l'extrémité libre.

9. Dispositif selon l'une des revendications 1 à 8, **caractérisé en ce que** la rainure s'étendant tout autour (6) ou la saillie annulaire (21) est disposée dans la partie médiane de la face de pourtour (4).

10. Dispositif selon l'une des revendications 1 à 9, **caractérisé en ce que** le bout rapporté de matériau est interrompu au voisinage d'ouvertures dans la paroi tubulaire.

11. Dispositif selon l'une des revendications 1 à 10, **caractérisé en ce que** le guidage comporte en outre une nervure annulaire saillante (8, 9) à au moins un des deux bords de la face de pourtour (4).

12. Dispositif selon la revendication 11, **caractérisé en ce que** la nervure annulaire (8) délimite une autre rainure (7) s'étendant tout autour dans la face de pourtour (4) pour la réception d'une saillie (18), formée par la compression du joint d'étanchéité, de la section d'étanchéité tubulaire (10).

13. Dispositif selon la revendication 12, **caractérisé en ce que** la hauteur de la nervure annulaire (8) est plus petite que la longueur saillante de la saillie (18).

14. Procédé de fixation d'un joint d'étanchéité (2), rendant étanche en particulier une porte de véhicule, à une carrosserie de véhicule (3), dans lequel un rouleau (1) se déplace le long d'un siège de réception (5) du joint d'étanchéité (2), et le joint d'étanchéité (2) est pressé avec la face de pourtour (4) du rouleau (1) contre le siège de réception (5), et le joint d'étanchéité (2), par un roulement du rouleau (1) à l'état appliqué par pression dans sa direction longitudinale, est relié continuellement à la carrosserie de véhicule, et dans lequel le joint d'étanchéité, pour s'assurer à l'encontre d'un déplacement sur la face de pourtour (4), est guidé dans la direction de l'axe de rotation du rouleau,
**caractérisé en ce que** dans le cadre du procédé, le joint d'étanchéité (2) est modifié, et pour le guidage un bout rapporté de matériau (14) et/ou un évidement de matériau (20) est formé au joint d'étanchéité (2.2a) de sorte qu'à l'état appliqué par pression au joint d'étanchéité (2) est formé par le bout rapporté de matériau (14), un rail de guidage (16) pour l'engagement dans une rainure (6) s'étendant tout autour dans la face de pourtour (4) du rouleau (1) et/ou par l'évidement de matériau (20) est formée une rainure de guidage (22) pour la réception d'une saillie annulaire (21) faisant saillie de la face de pourtour du rouleau.
